# EUROPEAN PATENT SPECIFICATION

(11) **EP 3 057 807 B1**
(45) Date of publication and mention of the grant of the patent: **02.08.2017**
(21) Application number: 14795724.5
(22) Date of filing: 20.10.2014
(51) Int. Cl.: B60C 7/14, B60B 9/04, B60B 9/02, B60C 7/18

(54) **NON-PNEUMATIC WHEEL WITH REDUCED LATERAL STIFFNESS**
LUFTLOSER REIFEN MIT REDUZIERTER QUERSTEIFIGKEIT
PNEU NON-PNEUMATIQUE AVEC RIGIDITE TRANSVERSALE REDUITE

(30) Priority: 18.10.2013 US 201361893139 P
(43) Date of publication of application: 24.08.2016
(73) Proprietor: Compagnie Générale des Etablissements Michelin, 63000 Clermont-Ferrand (FR)
(72) Inventor: CRON, Steve, M., Greenville, SC 29605 (US); RHYNE, Timothy, Brett, Greenville, SC 29605 (US)
(74) Representative: Casalonga
(86) International application number: PCT/US2014/061328
(87) International publication number: WO 2015/058181

(56) References cited:
- WO-A1-95/14582
- WO-A2-2008/036789
- US-B2- 7 013 939

## Description

### BACKGROUND OF THE INVENTION

The subject matter of the present disclosure relates generally to tension-based non-pneumatic, structurally supported tires and wheels. More particularly, the invention relates to a tension-based non-pneumatic wheel having a reduced lateral stiffness that supports a load with its structural components and has pneumatic tire-like performance capabilities to serve as a replacement for a pneumatic tire.

The web spokes of a tension-based non-pneumatic tire have a high effective stiffness in tension and a low effective stiffness in compression. The low stiffness in compression allows the web spokes attached to the ground-contacting portion of the compliant band to accommodate deformation of the ground-contacting portion of the compliant band without transmitting significant vertical load. The web spokes are relatively thin compared to their length and, typically, will bend in compression. The lack of substantial compressive load support by the web spokes in the contact region facilitates the formation of the contact patch and absorption of obstacles. In addition, because the majority of the supported load and road shock must travel around the compliant band and through the tensioned web spokes, the tension-based non-pneumatic compliant wheel has improved comfort and shock absorption compared to pneumatic wheels. One example of a non-pneumatic wheel is described in US Patent Number 7,013,939. An example of a top-loading non-pneumatic wheel is shown in WO 2008/036789 A2 which discloses a non-pneumatic wheel having a plurality of web spokes that transmit tensile load forces between the annular band and the hub. An example of a bottom-loading non-pneumatic wheel is shown in WO199514582 which discloses a non-pneumatic wheel having a plurality of resilient ribs which are configured to have a lateral width which is wider at the tread portion than at the hub portion of the tire.

To facilitate the bending of the web spokes of the ground contacting portion of the tread, the spokes can be curved. Alternatively, the web spokes can be shaped during molding to have a predisposition to bend in a particular direction. Another alternative is to provide a connection between the hub and web spokes or between the compliant band and web spokes that acts in tension but allows relative movement of the web spoke in compression.

A non-pneumatic structurally supported wheel incorporating a compliant band and a plurality of tension-based load bearing structural components has a lateral stiffness inherent in the design of the wheel. Under certain circumstances it is desirable to adjust the lateral stiffness of the wheel to a desired lateral stiffness for a given application. For instance, when a non-pneumatic wheel with relatively high lateral stiffness is used off-road, for instance in an All-Terrain Vehicle (ATV), it creates a high force feedback into the steering mechanism.

### SUMMARY OF THE INVENTION

According to a one embodiment, a tension-based non-pneumatic structurally supported wheel with reduced lateral stiffness is achieved by tapering and twisting each web spoke by reducing the width of each web spoke and increasing the magnitude of the draft angle as each web spoke extends from the compliant tread band to the inner wheel portion of the wheel.

A tension-based non-pneumatic structurally supported wheel comprises a hub; a compliant, load supporting band disposed radially outward and concentrically with the hub; and a plurality of tension-based web elements, otherwise referred to as web spokes, extending between the hub and the compliant band, wherein each web spoke has a tapered lateral width which is greater near the compliant band than near the hub and a changing draft angle which is greater near the hub than near the compliant band. Generally, the compliant band comprises a reinforcing membrane or ply embedded in the band. The reinforcing ply comprises cords aligned in the circumferential direction embedded in an elastomeric layer. According to this embodiment, the decreasing tapered width and increasing draft angle of the plurality of webs as they extend radially inward from the compliant band decrease the lateral stiffness of the wheel, reducing force feedback into the steering mechanism of the vehicle while maintaining stability of the wheel.

Another embodiment of the structurally supported wheel comprises: a compliant band; a plurality of web spokes extending transversely across and radially inward from said compliant band; the plurality of web spokes attaching to a hub, each of the plurality of web spokes having a spoke width extending in an axial direction, a spoke length extending in a radial direction, a spoke thickness perpendicular to the other dimensions, a draft angle measured as the angle each of the plurality of web spokes make compared to the transverse axis of the wheel at a given position along the spoke length, the spoke width decreasing and the magnitude of the draft angle increasing as measured at a radially outward position to a radially inward position.

Another embodiment of the invention could include a structurally supported wheel comprising: a compliant band; a plurality of twisted web spokes extending transversely across and radially inward from the compliant band; the plurality of web spokes attaching to a hub, each of the plurality of web spokes having a spoke width extending in an axial direction, a spoke length extending in a radial direction, a spoke thickness perpendicular to the other dimensions, a draft angle measured as the angle each of the plurality of web spokes make compared to the transverse axis of the wheel at a given position along said spoke length, the spoke width decreasing and the magnitude of the draft angle increasing as measured at a radially outward position to a radially inward position.

In another embodiment the draft angle of the web spokes proximal to the compliant band is 0.5 degrees while the draft angle of the web spokes proximal to the hub is greater than 0.5 degrees.

In another embodiment the draft angle of the web spokes proximal to the compliant band is 4 degrees while the draft angle of the web spokes proximal to the hub is 12 degrees.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Figure 1 is a perspective view of the tension-based non-pneumatic structurally supported wheel with reduced lateral stiffness.
Figure 2 is a close-up perspective view of the wheel.
Figure 3 is a side view in the equatorial plane of the wheel.
Figure 4 is a close up partial side view in the equatorial plane of the wheel view showing two adjacent web spokes
Figure 5 is a section view of the outer radial end of the web spokes taken on line 5A - 5A of Figure 4.
Figure 6 is a section view of the middle portion of the web spokes taken on line 6 - 6 of Figure 4.
Figure 7 is a section view of the inner radial end of the web spokes taken on line 7 - 7 of Figure 4.
Figure 8 is a section view of the wheel taken along the equatorial plane of the wheel.
Figure 9 is a section view of the wheel taken on line 9 - 9 of Figure 3.

### DETAILED DESCRIPTION

For the purposes of the following description, the term "hub" refers to any device or structure for supporting the wheel and mounting it to a vehicle.

The compliant band is formed of a material capable of deforming under load, including bending of the band, to envelope obstacles and to conform to a contact surface, such as a road or floor. In particular, bending deformation of the band under load forms a contact patch with the contact surface, which provides pneumatic tire-like transmission of traction and steering forces. One aspect of the compliance of the wheel material is that the amount of bending of the band relates to the magnitude of the load on the wheel.

The compliant band may be formed of an elastomeric material, such as natural or synthetic rubber, polyurethane, foamed rubber and foamed polyurethane, segmented copolyesters and block co-polymers of nylon. Preferably, the material has an elastic modulus of about 9 MPa to about 60 MPa. The band may be unreinforced, or may include a reinforcing ply to increase the band's circumferential inextensibility.

The web spokes interconnect the hub and compliant band and act in tension to transmit load forces between the hub and the band. This provides, among other functions, support for the mass of a vehicle. Load support forces are generated by tension in the web spokes not connected to the ground-contacting portion of the band. The loaded hub can be said to hang from the upper portion of the compliant band, which defines an arch supporting the load. The web spokes may also be interconnected forming a plurality of web elements comprising a plurality of polygonal openings. It should be understood that when a web spoke is referred to, it may refer to a single row of web spokes spanning from the hub to the compliant band, or a plurality of rows of web spokes segments spanning from the hub to the compliant band.

For purposes of describing the invention, reference now will be made in detail to the tension-based non-pneumatic structurally supported wheel with reduced lateral stiffness, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment, can be used with another embodiment to yield a still further embodiment. Thus, it is intended that the present invention covers such modifications and variations as come within the scope of the appended claims and their equivalents.

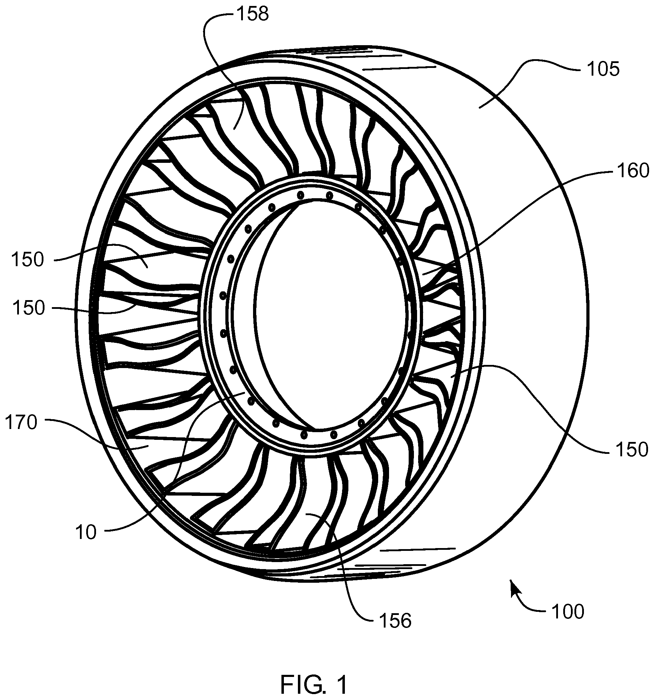

The tension-based non-pneumatic structurally supported wheel with reduced lateral stiffness 100, shown in perspective in Figure 1, the tread portion 105 is shown connected to the hub 10 by a plurality of tension transmitting elements, illustrated as web spoke elements 150. The web spokes 150 are shown here connected together at their inner radial ends by an inner band 160 and at their outer radial ends by an outer band 170. The inner band 160 anchors the wheel 100 to the hub 10. The outer band 170 anchors the tread portion 105 to the wheel 100. Tread features may be formed in the tread portion 105 and may include grooves, ribs, divots, protrusions and other tread features for traction and aesthetics. Each web spoke 150 possesses a front surface 156 and a rear surface 158.

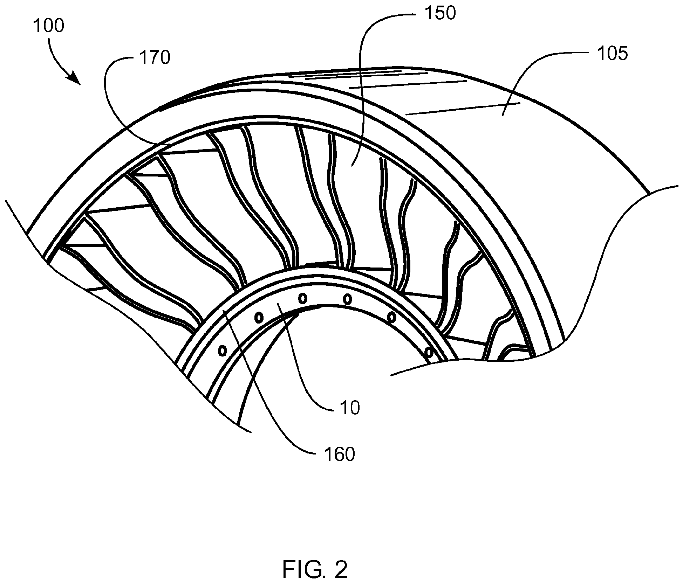

Figure 2 shows a close-up perspective partial view of an embodiment of the wheel 100. In this embodiment, each web spoke 150 possess a three radius blended profile that reduces stress concentration and encourages predictable flexing in compression. The tension carrying spokes may be interconnected and/or branched.

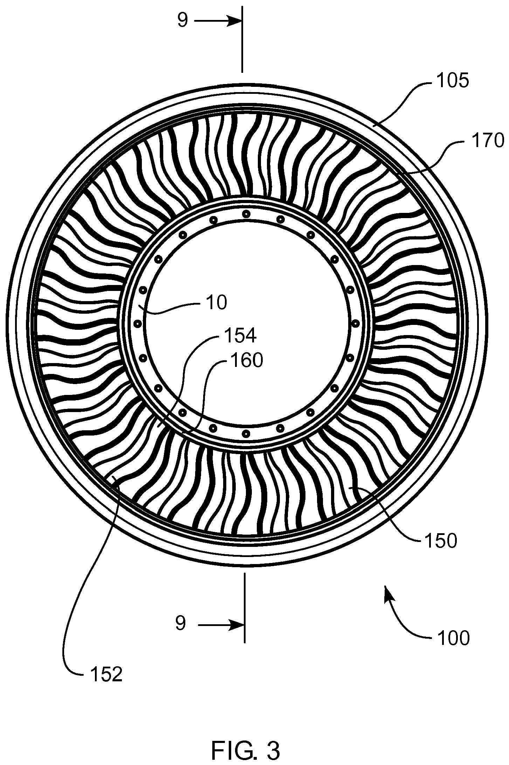

Figure 3 shows the embodiment from a view perpendicular to the equatorial plane of the wheel 100. The tread portion 105 forms the outer surface of the compliant band 110. In this embodiment, each web spoke 150 is angled such that the front surface 156 or rear surface 158 of each web spoke lies out of plane with the transverse axis of the wheel. In this embodiment, the draft angle varies from the outer radial end 152 of the web spoke 150 to the inner radial end 154 of the web spoke. At the inner radial end 154 of the web spoke, the draft angle is greater in magnitude than the draft angle at the outer radial end 152. In the view perpendicular to the equatorial plane of the embodiment, as shown in Figure 3, the draft angle and web width appears constant from the inner radial end 154 to the outer radial end 152. This appearance is due to the embodiment having a variable draft angle that is less in magnitude at the outer radial end 152 than at the inner radial end 154 while the width of the spoke is greater at the outer radial end 152 than at the inner radial end 154. While this appearance is present in the embodiment, it may not be present, or as pronounced in other embodiments of the wheel where the draft angle change chosen is different and or the taper of the width of the web spoke chosen is different than the embodiment.

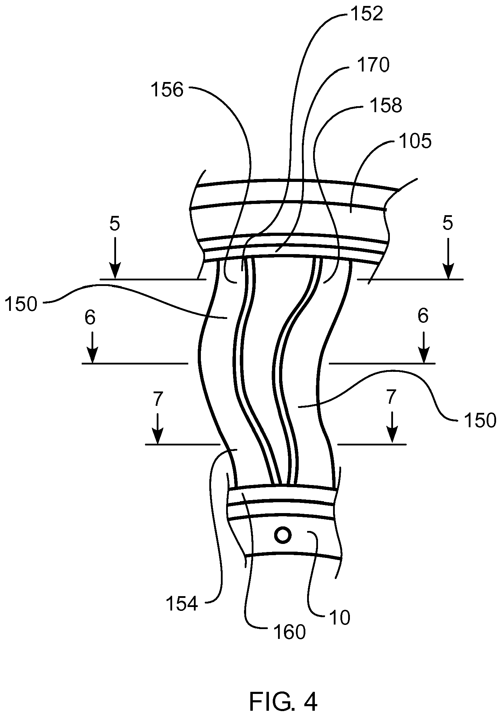

Figure 4 shows a close up partial view perpendicular to the equatorial plane of the tension-based non-pneumatic structurally supported wheel with reduced lateral stiffness showing two adjacent web spokes 150 having opposite draft angles.

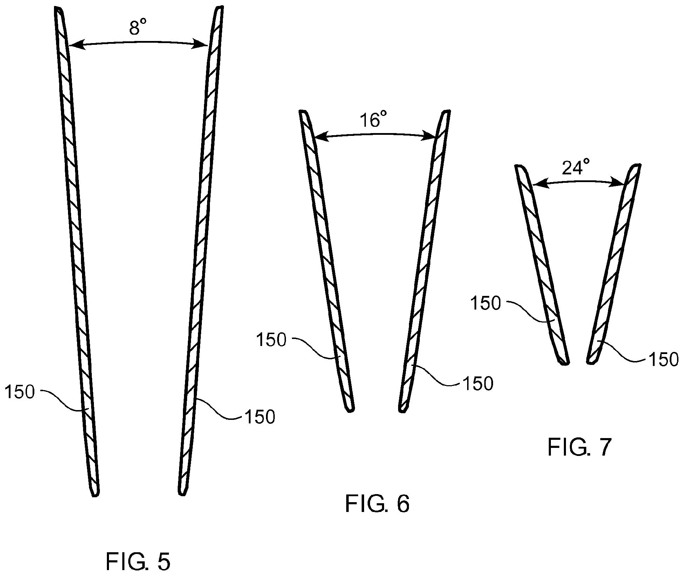

Figure 5 is a section view of the adjacent web spokes 150 taken on line 5-5 of Figure 4 which is at the outside radial end 152 of the web spoke 150. In the embodiment, the draft angle is small, if nearly parallel, to the transverse axis of the wheel 100.

Figure 6 is a section view of the adjacent web spokes 150 taken on line 6-6 of Figure 4 which is at a middle location along the length of the web spoke 150. In the embodiment, the magnitude of the draft angle is greater than at the outside radial end of the web spoke 150. The width of the web spoke 150 is less in the middle portion of the web spoke 150 than the width at the outside radial end 152 of the web spoke.

Figure 7 is a section view of the adjacent web spokes 150 taken on line 7-7 of Figure 4 which is at the inside radial end location 154 along the length of the web spoke 150. In the embodiment, the magnitude of the draft angle is greater than at the outside radial end 152 of the web spoke 150. The width of the web spoke 150 at the inside radial end 154 of the web spoke is less than the middle portion of the web spoke and less than the width of the web spoke at the outside radial end 152. In the embodiment, the draft angle is 12 degrees at the inner radial end 154 of the web spoke.

The draft angle changes from a smaller draft angle at the outside radial end to a greater draft angle at the inner radial end of the web spoke 150. The increased draft angle allows reduction of the lateral stiffness of the wheel. When discussing smaller or larger draft angles herein, it should be obvious that a "smaller" draft angle refers to a draft angle that is closer to having zero draft, while a larger draft angle is an angle that has a larger draft regardless of whether the spoke is angled clockwise or counterclockwise.

The change of draft angle along the length of the web spoke creates a web spoke 150 which is twisted. This twist is due to the variation of the draft angle as the web spoke 150 moves inward radially from the outer band 170 to the inner band 160. When the wheel 100 tread surface 105 is placed against a flat surface and the wheel 100 is loaded, for instance by the vehicle weight, the compliant band 110 flattens in the area of contact of the ground with the tread portion 105, this area of contact also generally referred to as the "footprint." This flattening of the compliant band reduces the distance from the outer band 170 to the inner band 160 resulting in web spokes 150 above the wheel 100 footprint to both bend along length of the web spoke 150 and deform across width of the web spoke 150 near the outer band 170 due to the equatorial flattening and any lateral deformation of the compliant band 110 that may be present due to tread sculpture or lateral curvature of the surface. This web spoke deformation can create a structural instability in the web spoke 150 which is reduced when the draft angle is reduced near the outer band. Thus, the twist allows for reduced lateral stiffness in the wheel 100 while reducing structural instability in each individual web spoke 150 when bending by allowing a smaller draft angle near the outer band 170 but a larger draft angle near the inner band 160.

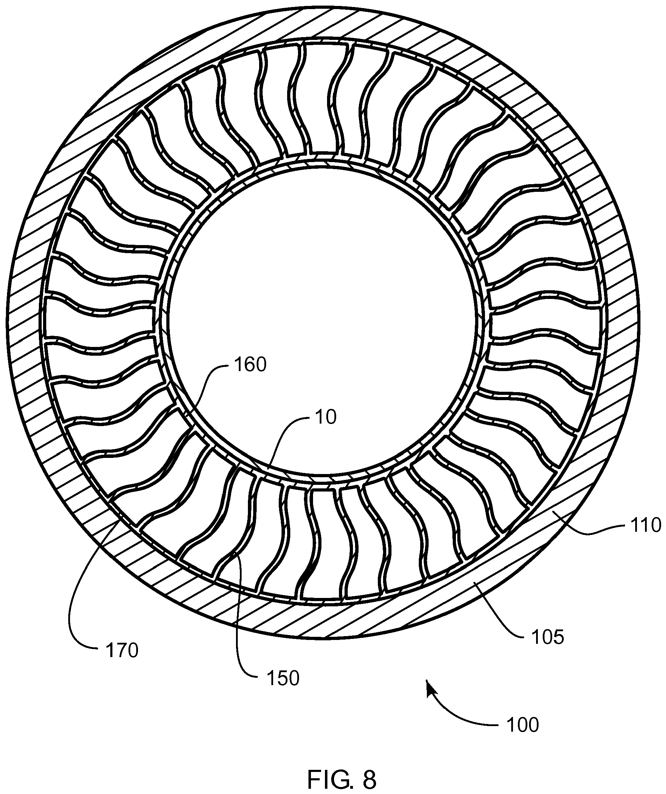

Figure 8 shows a section view along the equatorial plane of the wheel 100. In the embodiment as shown, the tread portion 105 of the wheel forms the outer periphery of the compliant band 110. Alternatively, the tread portion may be an additional layer bonded to the outer surface of the compliant band. The web spokes 150 possess a three curved radius blend profile aimed at reducing stress concentrations when the web spokes 150 are bearing the vehicle weight while encouraging predictable flexing in compression. Alternatively the spokes may be straight. Alternatively the web spoke 150 may be molded curved then straightened by thermal shrinkage during cooling to predispose them to curve in a particular direction. The web spokes are joined at the inner radial ends 154 by an inner band 160, which is secured to a hub 10. At the outer radial end 152 of the web spokes 150, each spoke is joined together by an outer band 170 which interconnect the web spokes together. In the embodiment, the inner band 160, web spokes 150 and outer band 170 are molded from a single material as a unit.

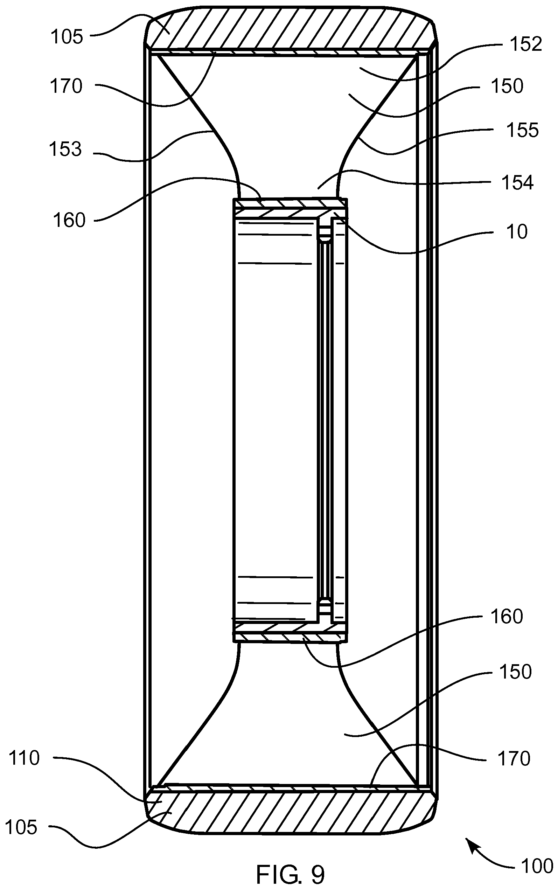

Figure 9 shows a cross section of the wheel 100 taken on line 9 - 9 of Figure 3 which is a view along a plane through the transverse axis of the tire. In the embodiment, each web spoke tapers from the inner radial end 154 to the outer radial end 152 generally increasing in diameter. This taper may be non-linear, such as, for example the taper as shown, or alternatively the taper may be linear. In the embodiment shown, the web spoke 150 taper is non-linear having a concave left edge 153 and right edge 155.

It should be understood that many other variations are apparent to one of ordinary skill in the art from a reading of the above specification. These variations and other variations are within the scope of the instant invention as defined by the following appended claims.

## Claims

1. A tension-based non-pneumatic structurally supported wheel (100) comprising:
a hub (10);
a compliant load supporting band (170) disposed radially outward and concentrically with the hub (10); and
a plurality of tension-based web elements (150) extending between the hub (10) and the compliant band (170),
**characterized in that** each web element (150) has a tapered lateral width which is greater near the compliant band (170) than near the hub (10) and each web element (150) has a changing draft angle which is greater near the hub (10) than near the compliant band (170).

2. The wheel (100) according to claim 1 wherein the compliant band (170) comprises a reinforcing membrane embedded in the band.

3. The wheel (100) according to claim 2 wherein the reinforcing membrane comprises cords aligned in the circumferential direction embedded in an elastomeric layer.

4. The wheel (100) according to any of the above claims wherein the web elements (150) act in tension to transmit load forces between the hub (10) and the band and the web elements (150) support no substantial force in compression.

5. The wheel (100) according to any of the above claims wherein the difference in the draft angle near the hub (10) compared to the draft angle near the compliant band (170) creates the visual appearance when viewing the tire from a view perpendicular to the equatorial plane that the web width appears constant from the inner radial end (154) to the outer radial end (152).

6. The wheel (100) according to any of the above claims wherein the taper of the web elements (150) are linear as viewed from a view along a plane through the transverse axis of the wheel (100).

7. The wheel (100) according to any of the claims 1 to 5 wherein the taper of the web elements (150) are nonlinear as viewed from a view along a plane through the transverse axis of the wheel (100).

8. The wheel (100) according to claim 7 wherein the web element (150) has a concave left edge (153) and a concave right edge (155).

9. The wheel (100) according to any of the above claims wherein the draft angle of the web spokes (150) proximal to the compliant band (170) is 0.5 degrees while the draft angle of the web spokes (150) proximal to the hub (10) is greater than 0.5 degrees, wherein the draft angle is measured as the angle each said plurality of web elements (150) make relative to the transverse axis of the wheel (100) at a given position along and perpendicular to said spoke length, said spoke width decreasing and the magnitude of said draft angle increasing as measured at a radially outward position to a radially inward position.

10. The wheel (100) according to any of the above claims wherein the draft angle of the web spokes (150) proximal to the compliant band (170) is 4 degrees while the draft angle of the web spokes (150) proximal to the hub is 12 degrees, wherein the draft angle is measured as the angle each said plurality of web elements (150) make relative to the transverse axis of the wheel (100) at a given position along and perpendicular to said spoke length, said spoke width decreasing and the magnitude of said draft angle increasing as measured at a radially outward position to a radially inward position.

## Patentansprüche

1. Spannungsbasiertes luftloses selbsttragendes Rad (100), umfassend:
eine Nabe (10);
ein nachgiebiges lasttragendes Band (170), das radial auswärts und konzentrisch zu der Nabe (10) angeordnet ist; und
mehrere spannungsbasierte Stegelemente (150), die sich zwischen der Nabe (10) und dem nachgiebigen Band (170) erstrecken,
**dadurch gekennzeichnet, dass** jedes Stegelement (150) eine sich verjüngende laterale Breite hat, die in der Nähe des nachgiebigen Bandes (170) größer ist als in der Nähe der Nabe (10), und jedes Stegelement (150) einen sich ändernden Freiwinkel hat, der in der Nähe der Nabe (10) größer ist als in der Nähe des nachgiebigen Bandes (170).

2. Rad (100) nach Anspruch 1, wobei das nachgiebige Band (170) eine in das Band eingebettete Verstärkungsmembran umfasst.

3. Rad (100) nach Anspruch 2, wobei die Verstärkungsmembran in Umfangsrichtung ausgerichtete Korde umfasst, die in eine Elastomerschicht eingebettet sind.

4. Rad (100) nach einem der obigen Ansprüche, wobei die Stegelemente (150) unter Spannung stehen, um Lastkräfte zwischen der Nabe (10) und dem Band zu übertragen und die Stegelemente (150) bei Kompression keine wesentliche Kraft tragen.

5. Rad (100) nach einem der obigen Ansprüche, wobei die Differenz im Freiwinkel in der Nähe der Nabe (10) gegenüber dem Freiwinkel in der Nähe des nachgiebigen Bandes (170) bei Betrachtung des Reifens aus einer Sicht senkrecht zu der Äquatorialebene zu dem optischen Erscheinungsbild führt, dass die Stegbreite vom inneren radialen Ende (154) zum äußeren radialen Ende (152) konstant erscheint.

6. Rad (100) nach einem der obigen Ansprüche, wobei die Verjüngung der Stegelemente (150) bei Betrachtung aus einer Sicht längs einer Ebene durch die Querachse des Rades (100) linear ist.

7. Rad (100) nach einem der Ansprüche 1 bis 5, wobei die Verjüngung der Stegelemente (150) bei Betrachtung aus einer Sicht längs einer Ebene durch die Querachse des Rades (100) nichtlinear ist.

8. Rad (100) nach Anspruch 7, wobei das Stegelement (150) einen konkaven linken Rand (153) und einen konkaven rechten Rand (155) besitzt.

9. Rad (100) nach einem der obigen Ansprüche, wobei der Freiwinkel der Streifenspeichen (150) proximal zu dem nachgiebigen Band (170) 0,5 Grad beträgt, während der Freiwinkel der Streifenspeichen (150) proximal zu der Nabe (10) größer ist als 0,5 Grad, wobei der Freiwinkel als der Winkel gemessen wird, den jedes der Vielzahl von Stegelementen (150) an einer gegebenen Position längs und senkrecht zu der Speichenlänge relativ zu der Querachse des Rades (100) bildet, wobei die Speichenbreite abnimmt und die Größe des Freiwinkels zunimmt, gemessen an einer radial äußeren Position zu einer radial inneren Position.

10. Rad (100) nach einem der obigen Ansprüche, wobei der Freiwinkel der Streifenspeichen (150) proximal zu dem nachgiebigen Band (170) 4 Grad beträgt, während der Freiwinkel der Streifenspeichen (150) proximal zu der Nabe 12 Grad beträgt, wobei der Freiwinkel als der Winkel gemessen wird, den jedes der Vielzahl von Stegelementen (150) relativ zu der Querachse des Rades (100) an einer gegebenen Position längs und senkrecht zu der Speichenlänge bildet, wobei die Speichenbreite abnimmt und die Größe des Freiwinkels zunimmt, gemessen an einer radial äußeren Position zu einer radial inneren Position.

## Revendications

1. Roue à support structurel non pneumatique basé sur la tension (100) comprenant :
un moyeu (10) ;
un bandeau souple de support de charge (170) disposé radialement vers l'extérieur et concentriquement avec le moyeu (10) ; et
une pluralité d'éléments d'âme basés sur la tension (150) qui s'étendent entre le moyeu (10) et le bandeau souple (170),
**caractérisée en ce que** chaque élément d'âme (150) présente une largeur latérale décroissante qui est plus grande près du bandeau souple (170) que près du moyeu (10), et chaque élément d'âme (150) présente un angle de dégagement variable qui est plus grand près du moyeu (10) que près du bandeau souple (170).

2. Roue (100) selon la revendication 1, dans laquelle le bandeau souple (170) comprend une membrane de renfort intégrée dans le bandeau.

3. Roue (100) selon la revendication 2, dans laquelle la membrane de renfort comprend des câbles alignés en direction circonférentielle, intégrés dans une couche élastomère.

4. Roue (100) selon l'une quelconque des revendications précédentes, dans laquelle les éléments d'âme (150) agissent en tension pour transmettre des forces de charge entre le moyeu (10) et le bandeau, et les éléments d'âme (150) ne supportent aucune force de compression substantielle.

5. Roue (100) selon l'une quelconque des revendications précédentes, dans laquelle la différence entre l'angle de dégagement près du moyeu (10) et l'angle de dégagement près du bandeau souple (170) crée, lorsque la roue est vue perpendiculairement au plan équatorial, l'effet visuel que la largeur de l'âme est constante depuis l'extrémité radiale interne (154) jusqu'à l'extrémité radiale externe (152).

6. Roue (100) selon l'une quelconque des revendications précédentes, dans laquelle la réduction de largeur des éléments d'âme (150) est linéaire vue selon un plan traversant l'axe transversal de la roue (100).

7. Roue (100) selon l'une quelconque des revendications 1 à 5, dans laquelle la réduction de largeur des éléments d'âme (150) est non linéaire vue selon un plan passant par l'axe transversal de la roue (100).

8. Roue (100) selon la revendication 7, dans laquelle l'élément d'âme (150) comporte un bord gauche concave (153) et un bord droit concave (155).

9. Roue (100) selon l'une quelconque des revendications précédentes, dans laquelle l'angle de dégagement des rayons d'âme (150) près du bandeau souple (170) est de 0,5 degrés alors que l'angle de dégagement des rayons d'âme (150) près du moyeu (10) est supérieur à 0,5 degrés, dans laquelle l'angle de dégagement est mesuré comme étant l'angle formé entre chaque élément de ladite pluralité d'éléments d'âme (150) et l'axe transversal de la roue (100) à une position donnée le long de ladite longueur de rayon et perpendiculairement à celui-ci, ladite largeur de rayon étant décroissante et la grandeur dudit angle de dégagement, telle que mesurée à une position radialement externe vers une position radialement interne, étant croissante.

10. Roue (100) selon l'une quelconque des revendications précédentes, dans laquelle l'angle de dégagement des rayons d'âme (150) près du bandeau souple (170) est de 4 degrés alors que l'angle de dégagement des rayons d'âme (150) près du moyeu est de 12 degrés, dans laquelle l'angle de dégagement est mesuré comme étant l'angle formé entre chaque élément de ladite pluralité d'éléments d'âme (150) et l'axe transversal de la roue (100) à une position donnée le long de ladite longueur de rayon et perpendiculairement à celui-ci, ladite largeur de rayon étant décroissante et la grandeur dudit angle de dégagement, telle que mesurée à une position radialement externe vers une position radialement interne, étant croissante.
